# EUROPEAN PATENT SPECIFICATION

(11) **EP 1 879 681 B1**
(45) Date of publication and mention of the grant of the patent: **30.03.2011**
(21) Application number: 06770389.2
(22) Date of filing: 15.05.2006
(51) Int. Cl.: B01D 35/20

(54) **DUAL HARDNESS COMPOSITE SCREEN FRAME**
VERBUNDABSCHIRMUNGSRAHMEN VON DOPPELTER HÄRTE
STRUCTURE DE TAMIS COMPOSITE A DOUBLE INDICE DE DURETE

(30) Priority: 13.05.2005 US 128787
(43) Date of publication of application: 23.01.2008
(73) Proprietor: M-I L.L.C., Houston, TX 77072 (US)
(72) Inventor: CADY, Eric, Florence, KY 41042 (US); CARR, Brian, Burlington, KY 41005 (US)
(74) Representative: Gill, Stephen Charles
(86) International application number: PCT/US2006/018800
(87) International publication number: WO 2006/124815

(56) References cited:
- EP-A- 1 230 987
- FR-A- 2 599 993
- GB-A- 2 087 265
- JP-A- 2002 001 220
- US-A- 3 289 837
- US-A- 4 021 337
- US-A- 4 655 907
- US-A- 4 832 834
- US-A- 5 059 310

## Description

### BACKGROUND OF INVENTION

Screen assemblies are used in vibratory separators to sort "oversized" particles from fluid or other particles, Screen assemblies include a wire or synthetic mesh screen cloth that is affixed to a frame. The frame is retained by the separator and product to be sorted is introduced to the top surface of the screen cloth, The combination of vibratory forces and product weight strains each wire in the screen cloth near the frame. Such strain varies from wire to wire around the edge of the screen assembly. Once a first wire yields or breaks under the strain, nearby wires are placed under greater strain and the break often widens across several wires,

Typically, screen assemblies used in vibratory separators have either steel, thermoset, or composite thermoplastic frames. The screen cloth is attached to a steel frame by spot welding or by using and adhesive. The screen cloth is attached to a thermoset frame by using an adhesive. For either attachment method, strain relief must be provided at the interface of the screen cloth and the frame when there is a large area of unsupported mesh. Typically, a bead of silicone or other caulking-type of elastomer bead is manually applied to the frame to provide strain relief to the screen cloth. However, the bond between silicone and steel is not always strong, resulting in pieces, or strings, of silicone, breaking free from the frame and screen cloth to contaminate the product being professed by the vibratory separator. Silicone is chemically undesirable to many end users. Further, early screen failure can occur when individual wires in the area of the lost strain relief are subjected to strain and fatigue, causing them to break. The use of a silicone bead typically extends cure time and thereby manufacturing costs. In addition, application of the silicon bead to the frame is often performed manually, which result in an inconsistent bead size and variations in the amount of material used from screen to screen. Such inconsistency is often observed between screens manufactured by a single operator as well as between screens manufactured by different operators.

The screen cloth typically is attached to rigid composite thermoplastic frames by first heating the thermoplastic material and then pressing the mesh into the soft thermoplastic, which is allowed to cool. The current or existing composite frame includes an internal mesh support grid that divides the screening area into relatively small discreet zones. The zones are each small enough that a strain relief is not necessary at the interface of the mesh and the outer Same. However, the internal support grind utilizes valuable sorting area, leaving less area for processing.

It would be an improvement to the art to have a screen assembly wherein the frame includes a strain relief zone providing sufficient strain support to the screen cloth to eliminate the need for an internal grid to support the screen cloth, or if an internal grid is required, to provide strain support so that large mesh spans between ribs are feasible.

It would also be an improvement to the art to have a screen assembly that can be manufactured in a process that is repeatable by a single operator and reproducible by different operators. It would also be an improvement to have a screen that may be manufactured using automated equipment to further improve the consistency between screen assemblies. In addition to improving the quality of the screen assembly, the improved uniformity of screen assemblies would also result in a more predictable screen life. It would also bo an improvement to have a screen that does not require the use of an adhesive or silicone which can take a relatively long time to cure during screen manufacturing.

FR A 2599993 proposes a frame member for a pressurized screening device including an inflatable tube disposed along and outwardly of the peripheral wall of the frame. GB A 2087265 proposes a sieve comprising a rigid frame which supports a sheet of mesh material and a fillet of elastic material bonded to the sheet inwardly of its junction with the frame.

### SUMMARY

A first aspect of the invention provides a screen assembly according to claim 1. A second aspect of the invention provides a frame for a screen assembly according to claim 9. A third aspect of the invention provides a screen assembly according to claim 17.

The claimed subject matter is generally directed to a screen assembly for a vibratory separator, The screen assembly includes a peripheral frame having a top mounting surface to which at least one screen cloth is affixed. The peripheral frame includes a rigid support section and a cushioned strain relief zone. The strain relief zone and the rigid support section may be discrete components wherein the strain relief zone is formed by a strain relief pad that is located adjacent to a rigid support member. The strain relief zone provides cushioned support to the screen cloth around the edge of the screen frame adjacent to the opening.

The peripheral frame includes a reinforcement member encapsulated within the rigid support section to provide additional rigidity to the frame. A flange may extend outward from the peripheral frame, wherein the screen assembly is retained within the vibratory separator by placing the flange between adjacent housing members. The strain relief zone may extend around the rigid support section such that the flange is encapsulated by the strain relief zone.

The screen frame may further include an internal support frame within the opening that divides the opening defined by the peripheral frame into a plurality of smaller openings. The internal frame also includes a rigid support section and a strain relief zone. The strain relief zone provides cushioned support to the screen cloth around each of the smaller openings.

The rigid support section is formed from a first materials having a first durometer and the strain relief zone is formed from a second material having a second durometer. The first durometer is greater than the second durometer. The rigid support section and the strain relief zone may be formed as separate components that are assembled to make the inventive screen frame. Alternatively, the strain relief zone may be co-molded with the rigid support section to form a single composite frame member wherein the strain relief zone is formed from a softer material, such as a thermoplastic elastomer and the rigid support area is formed from a more rigid member, such as a thermoplastic.

Other aspects and advantages of the claimed subject matter will be apparent from the following description and the appended claims.

### BRIEF DESCRIPTION OF THE DRAWINGS

FIG. 1 is a top view of a screen assembly of the present invention,
FIG. 2 is a cross sectional view of the screen frame.
FIGS. 3A-D are cross sectional side views of screen assembly configurations.
FIG. 4 is a cross sectional side view of a screen cloth adhered to the frame.
FIG. 5 is a top view of an embodiment of a screen frame.
FIG. 6 is a top view of an embodiment of a screen frame.

### DETAILED DESCRIPTION

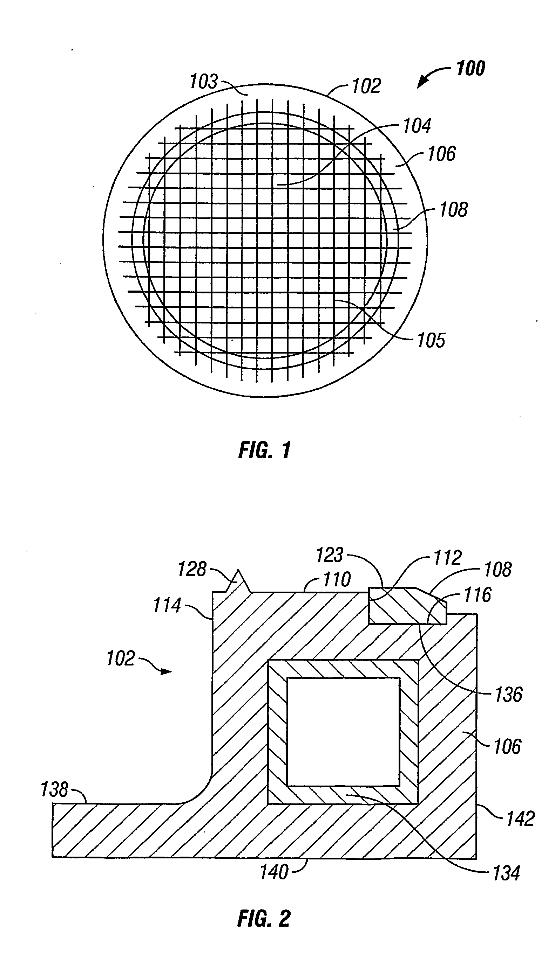

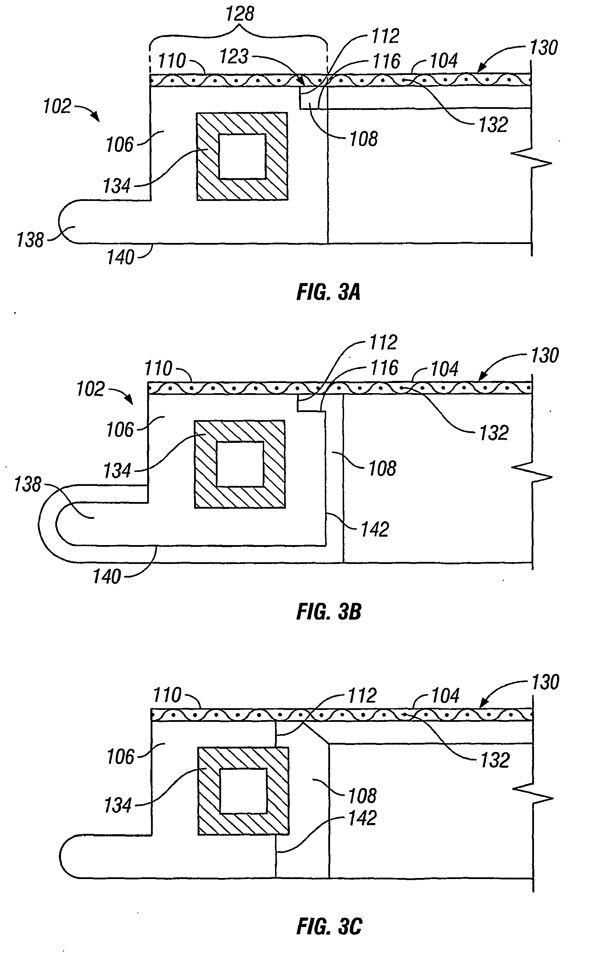

The claimed subject matter relates to a screen assembly 100 for a vibratory separator. Referring to FIG. 1, the screen assembly includes a frame 103 and a screen cloth 104. The frame includes a peripheral frame 102, which defines an opening 105 and includes at least two sections, an outer, rigid support section 106 and an inner, cushioned strain relief zone 108. As shown in FIGS. 3A - 3D, the screen cloth 104 is affixed to the frame 102.

Referring to FIGS. 3A - D, the rigid support section 106 and strain relief zone 108 are depicted. The strain relief zone 108 provides cushioned support to the screen cloth 104 when a load, such as product to be filtered or separated, is applied to the screen top surface 130. When a load is applied to the screen top surface 130, the wires 132 in the screen cloth 104 are pulled downward from the top mounting surface 110. Without strain relief zone 108, the wires 132 tend to bend along the inner edge 112 of the rigid support section 106. After some time, individual wires 132 often break inside the inner edge 112, due to strain and fatigue. The cushioned strain relief zone 108 absorbs a portion of the strain associated with the load on the screen top surface 130 in the area adjacent to the rigid support section 106. Fatigue and strain on individual wires 132 within the screen cloth 104 are reduced along the strain relief zone 108.

The rigid support section 106 may be formed from a polymer material, preferably polypropylene. The material forming the rigid support member 106 may be filled with reinforcement particles, such as talc or fiberglass. The material forming the rigid support section 106 has a first durometer, which is sufficient to provide rigidity and support to the screen frame 102.

Referring to FIG. 2, the peripheral frame 102 preferably includes a reinforcement member 134 encapsulated within the rigid support section 106. The reinforcement member 134 may be a metal tube that is welded and formed into the outer shape of the screen frame 102. The purpose of the reinforcement member 134 is to provide additional stability to the peripheral frame 102. One of skill in the art will of course appreciate that any material that provides additional stability may be used to form the reinforcement member 134, including metal and polymer composite materials.

The strain relief zone 108 is formed from a polymer having a second durometer, which is less than the first durometer of the material forming the rigid support member 106. The softer strain relief pad 108 should be made from an elastomeric material, with a thermoplastic elastomer being preferred. Thermoplastic elastomer is available in a variety of durometers and bonds well to polypropylene. Further, thermoplastic elastomer is approved by the FDA and is resistant to many chemicals. Both the strain relief zone 108 and the rigid support section 106 may be made from materials approved by the FDA for screen assemblies 100 to be used in production processes for food and pharmaceutical products.

The rigid support section 106 may be formed by molding the material in a typical molding process. The strain relief zone 108 may be formed by an extrusion which is assembled to the rigid support section 106 to form a frame 102. Alternatively, the strain relief zone 108 may be co-molded with the rigid support section 106 either simultaneously or consecutively in a typical co-molding or two-shot molding process. When the strain relief zone 108 is co-formed with the rigid support section 106, the choice of materials for each component must be carefully selected to ensure that the strain relief zone 108 will remain affixed to the rigid support section 106.

Continuing to refer to FIG. 2, the frame includes a top mounting surface 110, which may include one or more ridges 128 to provide material sufficient to bond the screen cloth 104 to the rigid support section 106 by a method such as hot plate welding or sonic welding. To attach the screen cloth 104 (see FIGS. 3A - D) to the top mounting surface 110, the peripheral edge of the screen cloth is tightened to pretension the screen. Localized energy may be directed to the ridges 128 to soften the material sufficiently for the screen cloth 104 to be embedded within the material. The softened material of the ridges and top mounting surface travels through the pores in the screen cloth edge and over the wires. Upon cooling, the screen cloth 104 is adjoined to the screen frame 102. Flash traps (not shown), which are grooves in the upper surface of the rigid support section 106, may be included to receive excess melted frame material when the screen cloth 104 is bonded to the screen frame 102.

In the preferred embodiment, the rigid support section 106 includes a groove 136 within which the strain relief zone 108 is located. The groove 136 is located near an inner edge 112 of the rigid support section. The groove bottom provides a support surface 116 and is located below the top mounting surface 110 such that a top surface 123 of the strain relief zone 108 is above the top mounting surface 110 of the rigid support section 106 before the screen cloth 104 is affixed to the screen frame 102. Before the screen cloth 104 is affixed to the rigid support member, the top surface 123 of the strain relief zone 108 is slightly higher than the top mounting surface 110. As shown in FIGS. 3A - D, when the screen cloth 104 is affixed to the top mounting surface 110, the strain relief zone 108 is compressed to provide support to the screen cloth 104 around the opening 105 defined by the screen frame 102. As a load is applied to the screen top surface 130, the strain relief zone 108 further compresses to prevent localized strain on the individual wires 132.

Referring again to FIG. 2, the rigid support section 106 of the peripheral frame 102 may include a flange 138 extending radially outward. As in typical screen assemblies for vibratory separators, the flange 138 extends outward along a bottom surface 140. The bottom surface 140 is substantially parallel to the top mounting surface 110 and an inner peripheral wall 142 expends between the top mounting surface 110 and the bottom surface 140. The flange 138 is located on the side opposing the inner peripheral wall 142 and is used to retain the screen assembly 100 within the vibratory separator (not shown). A gasket (not shown) typically is used to seal the interface between the separator components and the flange 138.

The strain relief zone 108 and rigid support section 106 may have different configurations, as shown in FIGS. 3A - D. In a first configuration, shown in FIG. 3A, the strain relief zone 108 is located along a support surface 116 of the rigid support section 106 adjacent to the inner surface 112. The strain relief zone 108 is compressed between the support surface 116 and the screen cloth 104.

Referring to FIG. 3B, the strain relief zone 108 may encapsulate the rigid support section 106 from the inner surface 112 and support surface 116, along the inner perimeter wall 142, the bottom surface 140 and around the flange 138. The strain relief zone 108 thus provides the strain relief to the screen cloth 104 as well as replacing the gasket typically used to seal the interface between the flange 138 and the vibratory separator components. The strain relief zone 108 may be extruded and pushed onto the rigid support section 106. Alternatively, the strain relief zone 108 may be co-formed with the rigid support section 106. When the strain relief zone 108 and the rigid support section 106 are co-formed, the molded strain relief and gasket are free from crevices, where bacteria can grow, and need not be removed when the screen is cleaned, a favorable feature for food and sanitary applications.

The strain relief zone 108 must be present at the interface of the frame 102 and the screen cloth 104. Referring to FIG. 3C, the strain relief zone 108 may encapsulate the inner peripheral wall 142 of the rigid support section 106. Such a configuration may be desirable for co-molding the frame 102 and minimizing crevices.

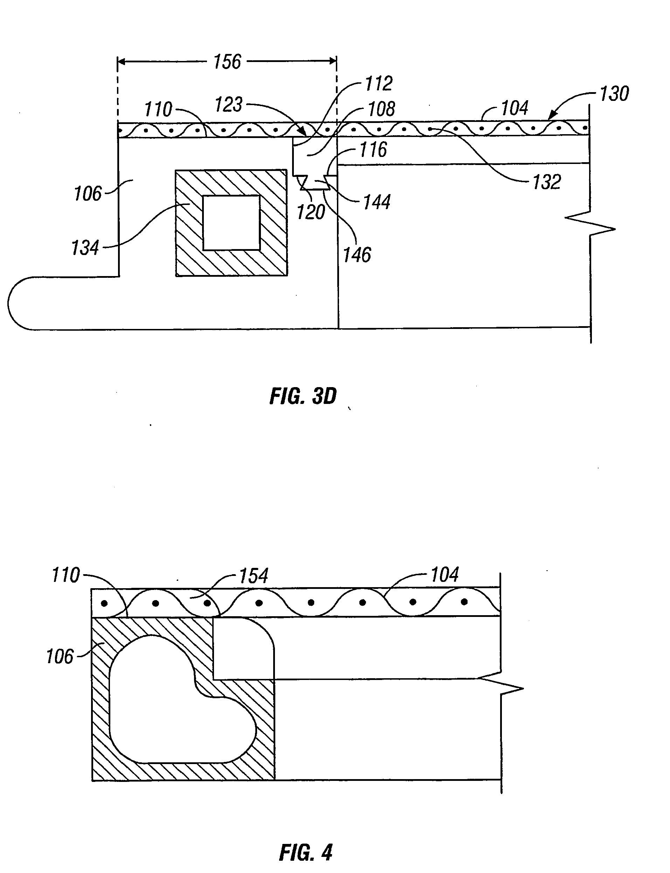

Referring to FIGS. 3D, the strain relief zone 108 may include a rib 144 extending from a bottom surface 120. The rigid support section 106 includes a corresponding groove 146 in the support surface 116. The rib 144 fits within, and may be welded into, the groove 146 to retain the strain relief zone 108 in a fixed position relative to the rigid support section 106. The groove 146 may have a size and shape such that the rib 144 is compressed to fit within the groove and/or wherein the rib 144 is compressed immediately adjacent the pad bottom surface 120 to retain the rib 144 within the groove 146.

As shown in FIG. 4, the screen cloth 104 may be adhered to the top mounting surface 110 of the rigid support frame 106 with an epoxy 154. When the rigid support frame 106 is formed from a thermoset material, the screen cloth 104 cannot be encapsulated therein. Thus, an adhesive or epoxy 154 is needed to attach the screen cloth 104 to the frame 102.

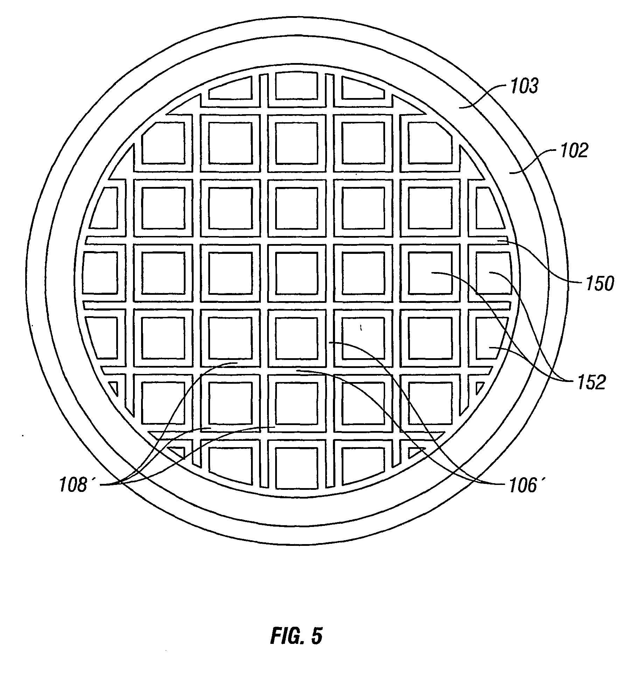

Referring to FIG. 5, the screen frame 103 may include a peripheral screen frame 102 and an internal support frame 150. The internal support frame 150 is formed with and is contiguous with the peripheral screen frame 102 to create a plurality of openings 152 within the screen frame 103. The screen cloth 104, (shown in FIGS. 1, 3A - D, 4) may be affixed to the internal support frame 150. As a load applied to the screen top surface 130 over each opening 152 defined by the internal support frame 150, the individual wires 134 along the internal support frame 150 are strained. The internal support frame 150 includes a rigid support section 106' and strain relief zone 108'. Thus, each opening 152 defined by the internal support frame 150 has a strain relief zone 108' around its periphery. Such a configuration is desirable when it is anticipated that the screen cloth 104 will be subjected to heavy loads.

One of skill in the art will appreciate that configurations such as those already described for the strain relief zone 108 and rigid support section 106 with respect to the peripheral frame 102 are applicable to the internal support frame 150. Reinforcement rods (not shown) may be included within the rigid support section 106' of the internal support frame 150.

One of skill in the art will further appreciate that alternative configurations of an internal support frame 150 are possible with equally applicable rigid support section 106' and strain relief zone 108' configurations. For example, an internal support frame 150 creating openings 152 having a pie shape may be desirable, wherein the strain relief zones 108' are present around each opening 152.

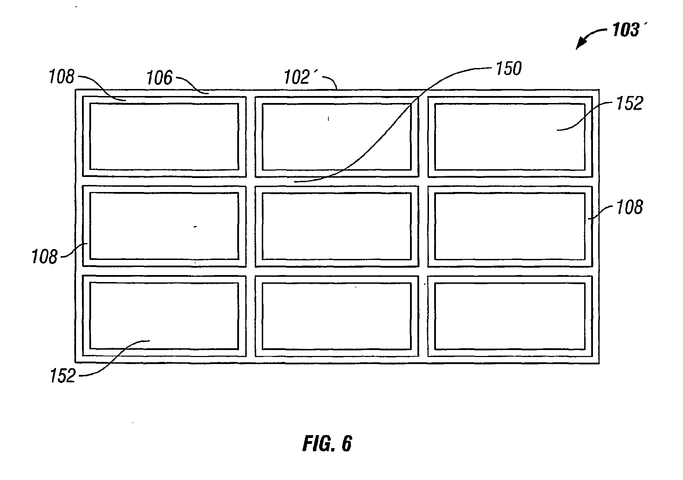

One of skill in the art will further appreciate that the described screen frame 103' may be rectangular in shape, as shown in FIG. 6, having a peripheral frame 102' with or without an internal support frame 150. The screen frame 103' would include a rigid support section 106 and a strain relief zone 108 around each opening 152 within the screen frame 103'.

While the claimed subject matter has been described with respect to a limited number of embodiments, those skilled in the art, having benefit of this disclosure, will appreciate that other embodiments can be devised which do not depart from the scope of the claimed subject matter as disclosed herein. For example, the use of anti-bacterial additives to the screen frame. Accordingly, the scope of the claimed subject matter should be limited only by the attached claims.

## Claims

1. A screen assembly (100) for a vibratory separator comprising:
a peripheral frame (102) around an opening (105), wherein the frame (102) has a top mounting surface (110);
at least one screen cloth (104) affixed to the top mounting surface (110) over the opening (105), wherein the screen cloth (104) has a screen top surface (130) and a screen bottom surface;
wherein the peripheral frame (102) comprises:
a rigid support section (106) to which the screen cloth (104) is affixed; and
a cushioned strain relief zone (108) located between the rigid support section (106) and the opening (105) adjacent to the top mounting surface (110) such that the screen bottom surface is supported by the strain relief zone (108);
**characterised in that**:
the rigid support section (106) is made from a polymer material; and
a reinforcement member (134) is encapsulated within the rigid support section (106) of the peripheral frame (102).

2. The screen assembly of claim 1 wherein the polymer material forming the rigid support section (106) of the peripheral frame (102) has a first durometer; wherein the strain relief zone (108) is made from a second material having a second durometer; and wherein the second durometer is less than the first durometer.

3. The screen assembly of claim 2 wherein the first material is a first polymer and the second material is a second polymer.

4. The screen assembly of claim 1 wherein the peripheral frame (102) further comprises: a flange (138) extending radially outward, wherein the flange (138) is made from the first polymer.

5. The screen assembly of claim 4 wherein strain relief zone (108) is formed by an extrusion made from the second polymer; and wherein the rigid support section (106) of the peripheral frame (102) has a groove (146) in which the extrusion is seated such that the extrusion provides support to the screen bottom surface.

6. The screen assembly of claim 4 wherein the strain relief zone (108) and the rigid support section (106) are comolded.

7. The screen assembly of claim 1 further comprising:
an internal support frame (150) contiguous with the peripheral frame (102) and dividing the opening (105) into a plurality of openings (152);
wherein the internal support frame (150) includes:
an internal rigid support section (106') having an internal top mounting surface (110) to which the screen cloth is affixed; and
an internal cushioned strain relief zone (108') located between the internal rigid support section (106') and each opening (152) adjacent to the top mounting surface such that the screen bottom surface is supported by the strain relief zone (108').

8. The screen assembly of claim 7, wherein the internal rigid support section (106') is made from a first polymer having a first durometer; wherein the internal strain relief zone (108') is made from a second polymer having a second durometer; and wherein the first durometer is greater than the second durometer.

9. A frame (103) for a screen assembly (100) to be used in a vibratory separator, wherein the screen assembly (100) includes at least one screen cloth (104) having a screen bottom surface, the frame (103) comprising:
a rigid support section (106) having an opening (105) therethrough, wherein the screen cloth (104) is affixed to the rigid support section (106) over the opening (105); and
a cushioned strain relief zone (108) located between the rigid support section (106) and the opening (105) adjacent to the screen cloth (104) such that the screen cloth bottom surface adjacent to the opening (105) is supported by the strain relief zone (108);
**characterised in that**:
the rigid support section (106) is formed from a polymer material; and
a reinforcement member (134) is located within the rigid support section (106).

10. The frame of claim 9, wherein the rigid support section (106) further comprises: a flange (138) extending outward from a frame periphery; and wherein the strain relief zone (108) encapsulates the flange (138).

11. The frame of claim 9 wherein the rigid support section (106) is formed from a first polymer material having a first durometer and the strain relief zone (108) is formed from a second polymer material having a second durometer; and wherein the first durometer is greater than the second durometer.

12. The frame of claim 11 wherein the rigid support section (106) includes a top mounting surface (110); and wherein the screen cloth (104) is affixed to the top mounting surface (110) of the rigid support section (106).

13. The frame of claim 11 wherein the strain relief zone (108) is formed by an extrusion made from the second polymer; and wherein the rigid support section of the peripheral frame (102) has a groove (146) in which the extrusion is seated such that the extrusion provides support to the screen bottom surface.

14. The frame of claim 11 wherein the rigid support section (106) is formed from a first polymer and the strain relief zone (108) is formed from a second polymer; and wherein the rigid support member (106) and the strain relief zone (108) are co-molded.

15. The frame of claim 11 wherein the first polymer is a thermoplastic; and wherein the second polymer is an elastomeric material.

16. The frame of claim 11 wherein the first polymer is polypropylene; and wherein the second polymer is a thermoplastic elastomer.

17. A screen assembly (100) for a vibratory separator comprising:
a peripheral frame (102) around an opening (105);
an internal support frame (150) contiguous with the peripheral frame (102) and dividing the opening (105) into a plurality of openings (152);
wherein the peripheral frame (102) and the internal support frame (150) each comprise:
a rigid support section (106, 106') having a top mounting surface (110) and formed from a first material having a first durometer
a reinforcement member (134) encapsulated within the rigid support section (106, 106') of the peripheral frame (102); and
a cushioned strain relief zone (108, 108') formed from a second material having a second durometer;
wherein the strain relief zone (108, 108') is located adjacent to the top mounting surface (110) of the rigid support section (106, 106'); and
wherein the first durometer is greater than the second durometer;
a screen cloth (104) stretched across all of the openings (105, 150) and affixed to the top mounting surface (110); and
wherein the strain relief zone (108, 108') is against the screen cloth (104) around each of the openings (105, 150).

18. The screen assembly of claim 17, further comprising: a flange (138) extending radially outward from the peripheral frame (102), wherein the flange (138) is formed from the first material.

19. The screen assembly of claim 18 wherein the rigid support section (106, 106') and the strain relief zone (108, 108') are comolded.

20. The screen assembly of claim 19 wherein the strain relief zone (108, 108') encapsulates the flange (138).

21. The screen assembly of claim 19 wherein the strain relief zone (108, 108') is formed from an extruded strain relief pad including a rib (144) extending from a bottom surface (120); and wherein the rigid support section (106, 106') includes a corresponding groove (146) to receive the rib (144) and retain the strain relief pad in a desired location.

## Patentansprüche

1. Siebanordnung (100) für ein Schütteltrennvorrichtung, die Folgendes umfasst:
einen Umfangsrahmen (102) um eine Öffnung (105) herum, wobei der Rahmen (102) eine obere Befestigungsfläche (110) aufweist;
zumindest ein Siebgewebe (104), das an der oberen Befestigungsfläche (110) oberhalb der Öffnung (105) befestigt ist, wobei das Siebgewebe (104) eine obere Siebfläche (130) und eine untere Siebfläche aufweist;
wobei der Umfangsrahmen (102) Folgendes umfasst:
einen starren Trägerabschnitt (106), an dem das Siebgewebe (104) befestigt wird; und
einen gepolsterten Entlastungsbereich (108), der zwischen dem starren Trägerabschnitt (106) und der Öffnung (105) an die obere Befestigungsfläche (110) angrenzend so angeordnet ist, dass die untere Siebfläche auf dem Entlastungsbereich (108) aufliegt;
**dadurch gekennzeichnet, dass**:
der starre Trägerabschnitt (106) aus einem Polymermaterial besteht und
ein Verstärkungselement (134) in dem starren Trägerabschnitt (106) des Umfangsrahmens (102) eingeschlossen ist.

2. Siebanordnung nach Anspruch 1, worin das Polymermaterial, das den starren Trägerabschnitt (106) des Umfangsrahmens (102) bildet, einen ersten Durometerwert aufweist; worin der Entlastungsbereich (108) aus einem zweiten Material mit einem zweiten Durometerwert besteht; und worin der zweite Durometerwert geringer ist als der erste Durometerwert.

3. Siebanordnung nach Anspruch 2, worin das erste Material ein erstes Polymer ist und das zweite Material ein zweites Polymer ist.

4. Siebanordnung nach Anspruch 1, worin der Umfangsrahmen (102) ferner Folgendes umfasst: einen Flansch (138), der sich radial nach außen erstreckt, wobei der Flansch (138) aus dem ersten Polymer besteht.

5. Siebanordnung nach Anspruch 4, worin der Entlastungsbereich (108) durch Extrusion des zweiten Polymers ausgebildet wird; und worin der starre Trägerabschnitt (106) des Umfangsrahmens (102) eine Nut (146) aufweist, in der das Extrusionsprodukt so eingelegt wird, dass dieses eine Auflage für die untere Siebfläche bildet.

6. Siebanordnung nach Anspruch 4, worin der Entlastungsbereich (108) und der starre Trägerabschnitt (106) gemeinsam geformt werden.

7. Siebanordnung nach Anspruch 1, die ferner Folgendes umfasst:
einen inneren Trägerrahmen (150), der an den Umfangsrahmen (102) angrenzt und
die Öffnung (105) in eine Vielzahl von Öffnungen (152) unterteilt;
worin der innere Trägerrahmen (150) Folgendes umfasst:
einen inneren starren Trägerabschnitt (106') mit einer inneren oberen Befestigungsfläche (110), an der das Siebgewebe befestigt ist; und
einen inneren gepolsterten Entlastungsbereich (108'), der zwischen dem inneren starren Trägerabschnitt (106') und jeder Öffnung (152), die in Bezug auf die obere Befestigungsfläche benachbart vorliegt, angeordnet ist, sodass die untere Siebfläche auf dem Entlastungsbereich (108') aufliegt.

8. Siebanordnung nach Anspruch 7, worin der innere starre Trägerabschnitt (106') aus einem ersten Polymer mit einem ersten Durometerwert besteht; worin der innere Entlastungsbereich (108') aus einem zweiten Material mit einem zweiten Durometerwert besteht; und worin der erste Durometerwert größer ist als der zweite Durometerwert.

9. Rahmen (103) für eine Siebanordnung (100) zur Verwendung in einer Schütteltrennvorrichtung, worin die Siebanordnung (100) zumindest ein Siebgewebe (104) mit einer unteren Siebfläche umfasst, wobei der Rahmen (103) Folgendes umfasst:
einen starren Trägerabschnitt (106) mit einer Öffnung (105), die durch diesen hindurch verläuft, worin das Siebgewebe (104) an dem starren Trägerabschnitt (106) oberhalb der Öffnung (105) angebracht ist; und
einen gepolsterten Entlastungsbereich (108), der zwischen dem starren Trägerabschnitt (106) und der Öffnung (105) an das Siebgewebe (104) so angrenzend angeordnet ist, dass die untere Fläche des Siebgewebes, die in Bezug auf die Öffnung (105) angrenzend angeordnet ist, auf dem Entlastungsbereich (108) aufliegt;
**dadurch gekennzeichnet, dass**:
der starre Trägerabschnitt (106) aus einem Polymermaterial ausgebildet ist und
ein Verstärkungselement (134) in dem starren Trägerabschnitt (106) angeordnet ist.

10. Rahmen nach Anspruch 9, worin der starre Trägerabschnitt (106) ferner Folgendes umfasst: einen Flansch (138), der sich von einem Rahmenumfang nach außen erstreckt; und worin der Entlastungsbereich (108) den Flansch (138) einschließt.

11. Rahmen nach Anspruch 9, worin der starre Trägerabschnitt (106) aus einem ersten Polymermaterial mit einem ersten Durometerwert besteht und der Entlastungsbereich (108) aus einem zweiten Polymermaterial mit einem zweiten Durometerwert besteht; und worin der erste Durometerwert größer ist als der zweite Durometerwert.

12. Rahmen nach Anspruch 11, worin der starre Trägerabschnitt (106) eine obere Befestigungsfläche (110) umfasst; und worin das Siebgewebe (104) an der oberen Befestigungsfläche (110) des starren Trägerabschnitts (106) befestigt ist.

13. Rahmen nach Anspruch 11, worin der Entlastungsbereich (108) durch Extrusion des zweiten Polymers ausgebildet wird; und worin der starre Trägerabschnitt (106) des Umfangsrahmens (102) eine Nut (146) aufweist, in der das Extrusionsprodukt so eingelegt wird, dass dieses eine Auflage für die untere Siebfläche bildet.

14. Rahmen nach Anspruch 11, worin der starre Trägerabschnitt (106) aus einem ersten Polymer besteht und der Entlastungsbereich (108) aus einem zweiten Polymer besteht; und worin das starre Trägerelement (106) und der Entlastungsbereich (108) gemeinsam geformt werden.

15. Rahmen nach Anspruch 11, worin das erste Polymer ein thermoplastisches Polymer ist; und worin das zweite Polymer ein Elastomermaterial ist.

16. Rahmen nach Anspruch 11, worin das erste Polymer Polypropylen ist; und worin das zweite Polymer ein thermoplastisches Elastomer ist.

17. Siebanordnung (100) für eine Schütteltrennvorrichtung, die Folgendes umfasst:
einen Umfangsrahmen (102) um eine Öffnung (105);
einen inneren Trägerrahmen (150), der an den Umfangsrahmen (102) angrenzt und
die Öffnung (105) in eine Vielzahl an Öffnungen (152) unterteilt;
worin der Umfangsrahmen (102) und der innere Trägerrahmen (150) jeweils Folgendes umfassen:
einen starren Trägerabschnitt (106, 106') mit einer oberen Befestigungsfläche (110), der aus einem ersten Material mit einem ersten Durometerwert gebildet ist;
ein Verstärkungselement (134), das in dem starren Trägerabschnitt (106, 106') des Umfangsrahmens (102) eingeschlossen ist; und
einen gepolsterten Entlastungsbereich (108, 108') aus einem zweiten Material mit einem zweiten Durometerwert;
worin der Entlastungsbereich (108, 108') benachbart in Bezug auf den oberen Befestigungsbereich (110) des starren Trägerabschnitts (106, 106') angeordnet ist; und
worin der erste Durometerwert größer ist als der zweite Durometerwert;
ein Siebgewebe (104), das über alle Öffnungen (105, 150) gespannt ist und an der oberen Befestigungsfläche (110) befestigt ist; und
worin der Entlastungsbereich (108, 108') gegen das Siebgewebe (104) um jede der Öffnungen (105, 150) vorliegt.

18. Siebanordnung nach Anspruch 17, die ferner Folgendes umfasst: einen Flansch (138), der sich von dem Umfangsrahmen (102) radial nach außen erstreckt, worin der Flansch (138) aus dem ersten Material besteht.

19. Siebanordnung nach Anspruch 18, worin der starre Trägerabschnitt (106, 106') und der Entlastungsbereich (108, 108') gemeinsam geformt werden.

20. Siebanordnung nach Anspruch 19, worin der Entlastungsbereich (108, 108') den Flansch (138) einschließt.

21. Siebanordnung nach Anspruch 19, worin der Entlastungsbereich (108, 108') aus einem extrudierten Entlastungskissen besteht, das eine Rippe (144), die sich von einer unteren Fläche (120) weg erstreckt, umfasst; und worin der starre Trägerabschnitt (106, 106') eine entsprechende Nut (146) umfasst, um die Rippe (144) aufzunehmen und das Entlastungskissen an der gewünschten Position zu halten.

## Revendications

1. Ensemble de tamis (100) pour un séparateur à vibrations comprenant:
un cadre périphérique (102) autour d'une ouverture (105), où le cadre (102) possède une surface de montage supérieure (110);
au moins un tissu de tamis (104) fixé à la surface de montage supérieure (110) sur l'ouverture (105), où le tissu de tamis (104) possède une surface supérieure de tamis (130) et une surface inférieure de tamis;
où le cadre périphérique (102) comprend:
une section de support rigide (106) à laquelle le tissu de tamis (104) est fixé; et
une zone de détente des contraintes coussinée (108) située entre la section de support rigide (106) et l'ouverture (105) d'une manière adjacente à la surface de montage supérieure (110) de sorte que la surface inférieure de tamis est supportée par la zone de détente des contraintes (108);
**caractérisé en ce que** la section de support rigide (106) est réalisée en un matériau polymère; et un élément de renforcement (134) est encapsulé dans la section de support rigide (106) du cadre périphérique (102).

2. Ensemble de tamis selon la revendication 1, dans lequel le matériau polymère formant la section de support rigide (106) du cadre périphérique (102) a un premier duromètre; où la zone de détente des contraintes (108) est réalisée en un deuxième matériau ayant un deuxième duromètre; et où le deuxième duromètre est plus petit que le premier duromètre.

3. Ensemble de tamis selon la revendication 2, dans lequel le premier matériau est un premier polymère, et le deuxième matériau est un deuxième polymère.

4. Ensemble de tamis selon la revendication 1, dans lequel le cadre périphérique (102) comprend en outre une bride (138) s'étendant radialement vers l'extérieur, la bride (138) étant réalisée à partir du premier polymère.

5. Ensemble de tamis selon la revendication 4, dans lequel la zone de détente des contraintes (108) est formée par une extrusion faite du deuxième polymère; et où la section de support rigide (106) du cadre périphérique (102) présente une rainure (146) dans laquelle l'extrusion est logée de sorte que l'extrusion réalise un support pour la surface de fond du tamis.

6. Ensemble de tamis selon la revendication 4, dans lequel la zone de détente des contraintes (108) et la section de support rigide (106) sont comoulées.

7. Ensemble de tamis selon la revendication 1, comprenant en outre:
un cadre de support interne (150) contigu avec le cadre périphérique (102) et divisant l'ouverture (105) en une pluralité d'ouvertures (152);
où le cadre de support interne (150) comprend:
une section de support interne rigide (106') ayant une surface de montage supérieure interne (110) sur laquelle le tissu de tamis est fixé; et
une zone de détente des contraintes coussinée interne (108') situé entre la section de support rigide interne (106') et chaque ouverture (152) adjacente à la surface de montage supérieure de sorte que la surface inférieure du tamis est supportée par la zone de détente des contraintes (108').

8. Ensemble de tamis selon la revendication 7, dans lequel la section de support rigide interne (106') est réalisée à partir du premier polymère ayant un premier duromètre; où la zone de détente des contraintes internes (108') est réalisée à partir d'un deuxième polymère ayant un deuxième duromètre; et où le premier duromètre est plus grand que le deuxième duromètre.

9. Cadre (103) pour un ensemble de tamis (100) à utiliser dans un séparateur à vibrations, où l'ensemble de tamis (100) comporte au moins un tissu de tamis (104) ayant une surface de fond de tamis, le cadre (103) comprenant:
une section de support rigide (106) ayant une ouverture (105) à travers celle-ci, où le tissu de tamis (104) est fixé à la section de support rigide (106) sur l'ouverture (105); et
une zone de détente et contrainte coussinée (108) située entre la section de support rigide (106) et l'ouverture (105) adjacente au tissu de tamis (104) de sorte que la surface inférieure de tissu de tamis adjacente à l'ouverture (105) est supportée par la zone de détente des contraintes (108); **caractérisé en ce que** la section de support rigide (106) est réalisée en un matériau polymère; et un élément de renforcement (134) est situé dans la section de support rigide (106).

10. Cadre selon la revendication 9, dans lequel la section de support rigide (106) comprend en outre une bride (138) s'étendant vers l'extérieur depuis une périphérie de cadre, et où la zone de détente des contraintes (108) encapsule la bride (138).

11. Cadre selon la revendication 9, dans lequel la section de support rigide (106) est réalisée en un premier matériau polymère ayant un premier duromètre, et la zone de détente des contraintes (108) est réalisée en un deuxième matériau polymère ayant un deuxième duromètre; et où le premier duromètre est plus grand que le deuxième duromètre.

12. Cadre selon la revendication 11, dans lequel la section de support rigide (106) comporte une surface de montage supérieure (110); et où le tissu de tamis (104) est fixé à la surface de montage supérieure (110) de la section de support rigide (106).

13. Cadre selon la revendication 11, dans lequel la zone de détente des contraintes (108) est formée par une extrusion réalisée à partir du deuxième polymère; et où la section de support rigide de la bride périphérique (102) présente une rainure (146) dans laquelle l'extrusion est logée de sorte que l'extrusion fournit un support à la surface inférieure du tamis.

14. Cadre selon la revendication 11, dans lequel la section de support rigide (106) est réalisée en un premier polymère, et la zone de détente des contraintes (108) est réalisée en un deuxième polymère; et où l'élément de support rigide (106) et la zone de détente des contraintes (108) sont comoulées.

15. Cadre selon la revendication 11, dans lequel le premier polymère est un thermoplastique, et dans lequel le deuxième polymère est un matériau élastomère.

16. Cadre selon la revendication 11, dans lequel le premier polymère est du polypropylène, et où le deuxième polymère est un élastomère thermoplastique.

17. Ensemble de tamis (100) pour un séparateur à vibrations comprenant:
un cadre périphérique (102) autour d'une ouverture (105);
un cadre de support interne (150) contigu avec le cadre périphérique (102) et divisant l'ouverture (105) en une pluralité d'ouvertures (152);
où le cadre périphérique (102) et le cadre de support interne (150) comprennent chacun:
une section de support rigide (106, 106') ayant une surface de montage supérieure (110) et réalisée en un premier matériau ayant un premier duromètre;
un élément de renforcement (134) encapsulé dans la section de support rigide (106, 106') du cadre périphérique (102); et
une zone de détente des contraintes coussinée (108, 108') formée en un deuxième matériau ayant un deuxième duromètre;
où la zone de détente des contraintes (108, 108') est située d'une manière adjacente à la surface de montage supérieure (110) de la section de support rigide (106, 106'); et
où le premier duromètre est plus grand que le deuxième duromètre;
un tissu de tamis (104) étiré sur toutes les ouvertures (105, 150) et fixé à la surface de montage supérieure (106); et
où la zone de détente des contraintes (108, 108') est contre le tissu de tamis (104) autour de chacune des ouvertures (105, 150).

18. Ensemble de tamis selon la revendication 17, comprenant en outre une bride (138) s'étendant radialement vers l'extérieur depuis le cadre périphérique (102), où la bride (138) est réalisée à partir du premier matériau.

19. Ensemble de tamis selon la revendication 18, dans lequel la section de support rigide (106, 106') et la zone de détente des contraintes (108, 108') sont comoulées.

20. Ensemble de tamis selon la revendication 19, dans lequel la zone de détente des contraintes (108, 108') encapsule la bride (138).

21. Ensemble de tamis selon la revendication 19, dans lequel la zone de détente des contraintes (108, 108') est réalisée en un coussinet de détente des contraintes extrudé incluant une nervure (144) s'étendant d'une surface inférieure (120); et où la section de support rigide (106, 106') comprend une rainure correspondante (148) pour recevoir la nervure (144) et pour retenir le coussinet de détente des contraintes dans un emplacement souhaité.
